(19) Europäisches Patentamt / European Patent Office / Office européen des brevets

(11) **EP 2 947 168 B1**

(12) **EUROPEAN PATENT SPECIFICATION**

(45) Date of publication and mention of the grant of the patent:
**07.03.2018 Bulletin 2018/10**

(51) Int Cl.:
*C22C 38/04* (2006.01)   *C22C 38/58* (2006.01)
*C21C 7/04* (2006.01)   *C21C 7/076* (2006.01)
*C21D 8/06* (2006.01)   *C22C 38/02* (2006.01)
*C22C 38/08* (2006.01)   *C22C 38/10* (2006.01)
*C22C 38/12* (2006.01)   *C22C 38/14* (2006.01)
*C22C 38/18* (2006.01)   *C22C 38/20* (2006.01)
*C22C 38/22* (2006.01)   *C22C 38/24* (2006.01)
*C22C 38/26* (2006.01)   *C22C 38/28* (2006.01)
*C22C 38/34* (2006.01)   *C22C 38/40* (2006.01)
*C22C 38/44* (2006.01)   *C22C 38/46* (2006.01)

(21) Application number: **14740895.9**

(22) Date of filing: **15.01.2014**

(86) International application number:
**PCT/JP2014/050594**

(87) International publication number:
**WO 2014/112532 (24.07.2014 Gazette 2014/30)**

(54) **SI-KILLED STEEL WIRE ROD HAVING EXCELLENT FATIGUE PROPERTIES, AND SPRING USING SAME**

SI-BERUHIGTER STAHLWALZDRAHT MIT HERVORRAGENDEN ERMÜDUNGSEIGENSCHAFTEN SOWIE FEDER DAMIT

FIL MACHINE EN ACIER CALMÉ AU SI PRÉSENTANT D'EXCELLENTES PROPRIÉTÉS DE FATIGUE, ET RESSORT UTILISANT CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.01.2013 JP 2013004500**

(43) Date of publication of application:
**25.11.2015 Bulletin 2015/48**

(73) Proprietor: **Kabushiki Kaisha Kobe Seiko Sho (Kobe Steel, Ltd.)**
**Kobe-shi, Hyogo 651-8585 (JP)**

(72) Inventors:
• **SUGIMURA Tomoko**
  **Kobe-shi**
  **Hyogo 651-2271 (JP)**
• **SAKAI Hiroaki**
  **Hyogo 657-0863 (JP)**
• **YOSHIDA Yasumasa**
  **Hyogo 657-0863 (JP)**
• **TAI Hirofumi**
  **Hyogo 657-0863 (JP)**
• **OHTA Hiroki**
  **Hyogo 675-0137 (JP)**
• **ONODA Hiroyuki**
  **Hyogo 675-0137 (JP)**

(74) Representative: **Müller-Boré & Partner Patentanwälte PartG mbB**
**Friedenheimer Brücke 21**
**80639 München (DE)**

(56) References cited:
**EP-A1- 1 662 016**   **EP-A1- 2 028 285**
**EP-A1- 2 123 784**   **EP-A1- 2 143 812**
**EP-A1- 2 163 657**   **WO-A1-00/77271**
**JP-A- H0 234 748**   **JP-A- H10 130 714**
**JP-A- 2008 163 424**   **JP-A- 2009 275 262**
**JP-A- 2010 024 539**

• **SHU-HAO CHEN ET AL: "Top slag refining for inclusion composition transform control in tire cord steel", INTERNATIONAL JOURNAL OF MINERALS, METALLURGY AND MATERIALS, vol. 19, no. 6, 1 June 2012 (2012-06-01), pages 490-498, XP055286023, CN ISSN: 1674-4799, DOI: 10.1007/s12613-012-0585-3**

## Description

Technical Field

The present invention relates to a Si-killed steel wire rod excellent in fatigue properties and a spring obtained from the Si-killed steel wire rod. The Si-killed steel wire rod of the present invention is useful as material of processed products requiring high fatigue properties, for example, springs such as a valve spring to be used in an automobile engine and a suspension, a clutch spring, a brake spring and a suspension spring; and steel wires such as a steel cord, and in particular, is extremely useful as steel for a spring.

Background Art

As requirement of weigh reduction and high output for an automobile and the like is highly required, high fatigue properties are increasingly required in springs such as a valve spring and a suspension spring, and further improvement of fatigue properties is required in a steel for a spring, that is a material thereof. In particular, a request for improvement of fatigue properties is very strong in steel for a valve spring.

In steel for a spring, requiring high fatigue strength, it is necessary to reduce as possible nonmetallic inclusions present in a wire rod and becoming a start point of breakage, and various technologies of reducing the occurrence of wire breakage and fatigue breakage due to nonmetallic inclusions by appropriately controlling a composition of the nonmetallic inclusions has been proposed.

$Al_2O_3$ based inclusions are harmful to fatigue properties. Therefore, a technology of increasing fatigue properties using so-called "Si-killed steel" which deoxidizes using Si has been proposed.

For example, Non-Patent Document 1 describes that, in steel for a valve spring, deformation during hot working is accelerated by controlling a composition of inclusions to $CaO$-$Al_2O_3$-$SiO_2$ based or $MnO$-$Al_2O_3$-$SiO_2$ based amorphous stabilized composition, the inclusions do not become a start point of breakage, and fatigue properties are improved.

Furthermore, Patent Document 1 describes a technology in which at least one of Ca, Mg, La and Ce is added in a range of 20 ppm or less, and regarding an average composition of nonmetallic inclusions, at least one of MgO or CaO is contained in $Al_2O_3$-$SiO_2$-$MnO$ based inclusions.

Furthermore, Patent Documents 2 and 3 describe a high cleanliness steel in which an average composition of nonmetallic inclusions whose ratio (l/d) of length (l) to width (d) is 5 or less has been appropriately controlled. Of those, Patent Document 2 describes a technology of reducing harmful inclusions by making the composition of inclusions to a composition containing at least one of CaO and MgO, and predetermined amounts of $SiO_2$ and MnO, and additionally lowering a melting point of the inclusions, thereby reducing (elongating) a cross-section of inclusions during hot rolling. Furthermore, Patent Document 3 discloses a technology of lowering a melting point of inclusions by making a composition of inclusions in which CaO, MgO and $Al_2O_3$ are present together with a certain range of $SiO_2$, thereby reducing a cross-section of inclusions during hot rolling, and additionally destroying those during cold working.

On the other hand, Patent Documents 4 to 7 were proposed by the present applicant. Of those, Patent Document 4 describes a technology in which a size of carbide-based, nitride-based and carbonitride-based precipitates was specified for the purpose of controlling oxides to a low melting point composition and additionally suppressing occurrence of fatigue failure in which those precipitates that have not almost been considered as a problem are start points. Patent Document 5 describes a technology in which regarding $SiO_2$ that is hard, is difficult to deform during rolling, remains in a final product and is capable of causing breakage, formation of $SiO_2$ can be remarkably suppressed regardless of rolling conditions by controlling to a composition in which $SiO_2$ is not theoretically formed. Patent Document 6 investigates a form of inclusions after undergoing hot rolling, and describes a technology in which fragmentation of inclusions during rolling is accelerated by existing many fine grains in the inclusions, and a size of inclusions is reduced during hot rolling as compared with the conventional technology. Furthermore, Patent Document 7 describes a technology in which at least one of $LiO_2$ and $K_2O$ in an appropriate amount is positively added to $SiO_2$, $Al_2O_3$, CaO and MgO based inclusions to form oxide-based inclusions, thereby securing high ductility, and fatigue properties and wire drawability have been remarkably improved.

Prior Art Documents

Patent Document

Patent Document 1: JP-B-H07-6037
Patent Document 2: JP-B-H06-74484

Patent Document 3: JP-B-H06-74485
Patent Document 4: Japanese Patent No. 2898472
Patent Document 5: Japanese Patent No. 4134204
Patent Document 6: Japanese Patent No. 4347786
Patent Document 7: Japanese Patent No. 4423050

Non-Patent Document

Non-Patent Document 1: Tsuyoshi Mimura, 182nd and 183rd Nishiyama Memorial Technical Lecture "Inclusion Control and High Cleanliness Steel Production Technology", edited by The Iron and Steel Institute of Japan, Tokyo, 2004, p125

Summary of the Invention

Problems to be Solved by the Invention

As described above, required characteristics to the improvement of fatigue properties are increased more and more in the field of springs such as a valve spring, and ultrafine steel wires represented by a steel cord, and further improvement of fatigue properties is also required in a Si-killed steel wire rod.

The present invention has been made in view of the above circumstances, and an object thereof is to provide a Si-killed steel wire rod further excellent in fatigue properties, and a spring.

Means for Solving Problems

The Si-killed steel wire rod in the present invention which can solve the above problems has the main point that the Si-killed steel wire rod includes a Si-killed steel consisting of:

C: 1.2% or less (not inclusive of 0%, and "%" means "mass%" unless otherwise indicated, hereinafter the same), Si: 0.2 to 3%,

Mn: 0.1 to 2%, and optionally, one or more elements selected from the group consisting of: Cr: 3% or less (not inclusive of 0%), Ni: 0.5% or less (not inclusive of 0%), V: 0.5% or less (not inclusive of 0%), Ti: 0.1% or less (not inclusive of 0%), Zr: 0.1 % or less (not inclusive of 0%), Cu: 0.7% or less (not inclusive of 0%), Nb: 0.5% or less (not inclusive of 0%), Mo: 0.5% or less (not inclusive of 0%), Co: 0.5% or less (not inclusive of 0%), W: 0.5% or less (not inclusive of 0%), B: 0.005% or less (not inclusive of 0%), alkali metal: 0.002% or less (not inclusive of 0%), REM: 0.01% or less (not inclusive of 0%), Ba: 0.01% or less (not inclusive of 0%), and Sr: 0.01 % or less (not inclusive of 0%), with the balance consisting of iron and unavoidable impurities, wherein 80% or more of the number of oxide-based inclusions present in the steel wire rod is a $CaO$-$Al_2O_3$-$SiO_2$ based inclusion satisfying the following compositions (1A) and (1B):

(1A) $CaO+Al_2O_3+SiO_2+MgO+MnO \geq 85\%$
(1B) when $CAO+Al_2O_3+SiO_2+MgO+MnO$ is standardized as 100%, $MgO+MnO \leq 15\%$ and $CaO>MnO$,

wherein an average composition of the $CaO$-$Al_2O_3$-$SiO_2$ based inclusion satisfies the following (2):

(2) when $CaO+Al_2O_3+SiO_2+MgO+MnO$ is standardized as 100%, CaO: 10 to 60%, $Al_2O_3$: 3 to 40%, and $SiO_2$: 30% or more and less than 85%, and

an average composition of a $MnO$-$Al_2O_3$-$SiO_2$ based inclusion satisfying the following (3A) satisfies the following (3B):

(3A) when $CaO+Al_2O_3+SiO_2+MgO+MnO$ is standardized as 100%, $MnO+Al_2O_3+SiO_2 \geq 80\%$ and $MnO>CaO$,
(3B) when $CaO+Al_2O_3+SiO_2+MgO+MnO$ is standardized as 100%, MnO: 10 to 70%, $Al_2O_3$: 3 to 50%, and $SiO_2$: 20 to 75%.

In the present invention, a spring obtained from any one of the above Si-killed steel wire rods is encompassed.

Effects of the Invention

In the present invention, on the basis of the finding that $MnO$-$SiO_2$ based inclusions and $MnO$-$Al_2O_3$-$SiO_2$ based

inclusions rarely remaining in molten steel can become a start point of breakage, those inclusions are previously controlled to a relatively harmless composition. Therefore, further high fatigue properties can be achieved.

Embodiments for Carrying Out the Invention

The characteristic part of the present invention resides in that in a Si-killed steel wire rod wherein most of oxide based inclusions is controlled to an appropriate $CaO-Al_2O_3-SiO_2$ based composition, $MnO-SiO_2$ based inclusions formed in an initial stage of a deoxidizing step are also controlled so as to become $MnO-Al_2O_3-SiO_2$ based inclusions having a composition suitable for the improvement of fatigue properties. According to the present invention, $MnO-SiO_2$ based or $MnO-Al_2O_3-SiO_2$ based inclusions that are deoxidized products are not only controlled to the conventional $CaO-Al_2O_3-SiO_2$ based inclusions, but also controlled to $MnO-Al_2O_3-SiO_2$ based inclusions having a composition which leads to easy extension during hot working in the previous stage. Therefore, even in the case where inclusions that cannot be controlled to $CaO-Al_2O_3-SiO_2$ remain, lowering of fatigue properties is suppressed. As a result, further excellent Si-killed steel wire rod is obtained (see examples described after).

The details for achieving the present invention are described below.

In the conventional arts including the above-described patent documents, a method for providing steel for a spring excellent in fatigue property by controlling $MnO-SiO_2$ based inclusions and $MnO-Al_2O_3-SiO_2$ based inclusions that are deoxidized products to an appropriate composition such as $CaO-Al_2O_3-SiO_2$ or $CaO-MgO-Al_2O_3-SiO_2$; furthermore, controlling the inclusions further strictly or controlling the inclusions to further appropriate composition and form; furthermore, adding components having further appropriate properties; and the like, thereby accelerating extension of the inclusions has been proposed.

The present inventors have heretofore proposed many technologies for improving fatigue properties, but in the present invention, composition control of deoxidized products ($MnO-SiO_2$ based and $MnO-Al_2O_3-SiO_2$ based) that are products before controlling to $CaO-Al_2O_3-SiO_2$ and have not heretofore been noted has been focused on.

Since fatigue failure occurs from weakest part in steel being a start point, if harmful inclusions are present even in extremely rare cases, fatigue properties are remarkably deteriorated. Therefore, in the case where $MnO-Al_2O_3-SiO_2$ based inclusions that cannot be controlled to $CaO-Al_2O_3-SiO_2$ based inclusions remain, if those are harmful composition, those sometimes become a start point of failure.

The present invention has been completed through investigation in view of the circumstances, and has a technical significance in that by not only controlling $MnO-SiO_2$ based inclusions or $MnO-Al_2O_3-SiO_2$ based inclusions formed as deoxidized products to $CaO-Al_2O_3-SiO_2$ based inclusions, but also previously extending during hot working and controlling to a composition that is easy to be refined, the possibility that inclusions becoming a start point of failure remain in steel is further reduced, thereby further improving fatigue properties.

That is, in the present invention is a technology is developed on the assumption of the case where $MnO-SiO_2$ based inclusions or $MnO-Al_2O_3-SiO_2$ based inclusions remain in the technology of improving fatigue properties by controlling deoxidized products ($MnO-SiO_2$ based inclusions and $MnO-Al_2O_3-SiO_2$ based inclusions) to $CaO-Al_2O_3-SiO_2$ based inclusions. Therefore, the present invention can be applied to all of embodiments having the possibility that the inclusions remain, but is not applied to an embodiment in which the inclusions do not remain and the inclusions are not contained in steel at all. Furthermore, in the case where $MnO-Al_2O_3-SiO_2$ based inclusions remain, the number thereof is far smaller than the number of $CaO-Al_2O_3-SiO_2$ based inclusions, and is roughly 3% or less of the case of $CaO-Al_2O_3-SiO_2$ based inclusions.

To obtain a steel wire rod in which an average composition of not only $CaO-Al_2O_3-SiO_2$ based inclusions but also $MnO-Al_2O_3-SiO_2$ based inclusions is appropriately controlled as in the present invention, for example, a method of securing the time until all of harmful $MnO-SiO_2$ based inclusions and the like that are difficult to be extended during hot working are changed into $MnO-Al_2O_3-SiO_2$ based inclusions having a composition which leads to easy extension and refinement during hot working is effective. Specifically, for example, as described in the examples described hereinafter, a method of sufficiently securing the time until initiation of slag refining using CaO-containing slag after introducing alloy components such as Mn and Si (holding time until changing into $MnO-Al_2O_3-SiO_2$ based inclusions having a composition which leads to easy extension and refinement) is exemplified. Thereafter, by conducting slag refining using CaO-containing slag, $CaO-Al_2O_3-SiO_2$ based inclusions having a composition useful to improve fatigue properties are obtained, and even in the case where inclusions that are not controlled to $CaO-Al_2O_3-SiO_2$ based inclusions and remain are present, the residual inclusions are easy to be extended during hot rolling and become inclusions having relatively low degree of harmfulness, and a Si-killed steel wire rod further excellent in fatigue properties is obtained.

Each of inclusions constituting the Si-killed steel wire rod in the present invention is described in detail below.

In the present description, the oxide based inclusions mean inclusions in which concentrations of S and N contained in the inclusions are 2% or less, respectively. Furthermore, in calculating each content of oxides constituting each of the inclusions [(1B), (2), (3A) and (3B) described in detail below], or the total amount of two or three oxides [(1B) and (3A) described in detail below], it means that the contents are represented by the numerical value when

$CaO+Al_2O_3+SiO_2+MgO+MnO$ is standardized as 100%, in each case.

Contrary to this, in calculating the content of (1A) defining $CaO-Al_2O_3-SiO_2$ based inclusions, it means that the content is represented by a ratio to mass of all oxides including the above-described five oxides ($CaO$, $Al_2O_3$, $SiO_2$, $MgO$ and $MnO$) present in the inclusions, and other oxide species such as $TiO_2$ unavoidably present.

Furthermore, in the present description, the term "steel wire rod" means to include not only a steel wire rod after hot rolling, but a steel wire obtained by further subjecting the steel wire rod to wire drawing (cold drawing). That is, a steel wire having been subjected to wire drawing after hot rolling and satisfying the above-described requirements of the present invention are included in the meaning of the steel wire rod of the present invention.

Oxide-based inclusions characterizing the present invention are first described below.

In the Si-killed steel wire rod of the present invention, $CaO-Al_2O_3-SiO_2$ based inclusions satisfying (1A) and (1B) are present in an amount of 80% or more of the number in the steel wire rod, an average composition of the $CaO-Al_2O_3-SiO_2$ based inclusions satisfies the requirement of (2), and an average composition of the $MnO-Al_2O_3-SiO_2$ based inclusions satisfying (3A) satisfies (3B).

In detail, the Si-killed steel wire rod of the present invention is based on the premise that $CaO-Al_2O_3-SiO_2$ based inclusions are appropriately controlled so as to be suitable for improving fatigue properties. The present invention has the characteristic in that an average composition of $MnO-Al_2O_3-SiO_2$ based inclusions satisfying (3A) satisfies the requirement of (3B).

[With respect to $CaO-Al_2O_3-SiO_2$ based inclusions]

The present invention is based on the premise that when oxide-based inclusions present in a steel wire rod are measured by the method described after and the number of whole oxide-based inclusions in a measurement region is measured, 80% or more of the number (number ratio) is $CaO-Al_2O_3-SiO_2$ based inclusions satisfying (1A) and (1B) described below, and an average composition of the $CaO-Al_2O_3-SiO_2$ based inclusions satisfies (2) described below.

(1A) $CaO+Al_2O_3+SiO_2+MgO+MnO \geq 85\%$
(1B) When $CaO+Al_2O_{3+}SiO_2+MgO+MnO$ is standardized as 100%, $MgO+MnO \leq 15\%$ and $CaO>MnO$
(2) When $[CaO+Al_2O_3+SiO_2+MgO+MnO]$ is standardized as 100%, $CaO$: 10 to 60%, $Al_2O_3$: 3 to 40%, and $SiO_2$: 30% or more and less than 85%

It is already conventional that fatigue properties are improved by making such a composition, but each requirement is described below.

The above (1A) is first described below. The left-hand side of the (1A): $CaO+Al_2O_3+SiO_2+MgO+MnO$ means the content to the mass of all oxides including the above five kinds of oxides ($CaO$ and the like) present in inclusions and other oxide species such as $TiO_2$ unavoidably present.

Furthermore, in the above (1B), when $[CaO+Al_2O_3+SiO_2+MgO+MnO]$ is standardized as 100%, the content of $[MgO+MnO]$ is 15% or less. The reason why $[CaO>MnO]$ is defined in the above (1B) is to clearly distinguish from $MnO-Al_2O_3-SiO_2$ based inclusions described after.

The $CaO-Al_2O_3-SiO_2$ based inclusions defined by the above (1A) and (1B) occupies 80% or more of the number (number ratio) of all oxides present in a measurement region of a steel wire rod.

Furthermore, an average composition of $CaO-Al_2O_3-SiO_2$ based inclusions satisfying the above requirement satisfies the requirement of (2) described below. By this, $CaO-Al_2O_3-SiO_2$ based inclusions having a composition suitable for improving fatigue properties is formed. The term "average composition" used herein is not a composition of individual inclusions, but is an average value of the whole of $CaO-Al_2O_3-SiO_2$ based inclusions (inclusions satisfying the above (1A) and (1B)).

(2) When $[CaO+Al_2O_3+SiO_2+MgO+MnO]$ is standardized as 100%, $CaO$: 10 to 60%, $Al_2O_3$: up to 40%, and $SiO_2$: 30% or more and less than 85%

(2-1) $CaO$: 10 to 60%

$CaO$ is an essential component in order to convert oxide-based inclusions into soft inclusions that are easy to be refined in a hot rolling step of a steel wire rod. When the $CaO$ content in $CaO-Al_2O_3-SiO_2$ based inclusions lacks, the inclusions become high $SiO_2$ based inclusions or $SiO_2 \cdot Al_2O_3$ based hard inclusions. The inclusions are difficult to be refined in a hot rolling step, and this becomes great cause of deterioration of fatigue properties and wire drawability. Therefore, the $CaO$ content in $CaO-Al_2O_3-SiO_2$ based inclusions is at least 10% or more, preferably 20% or more, and more preferably 25% or more. However, when the $CaO$ content in $CaO-Al_2O_3-SiO_2$ based inclusions is too large, hot deformation capability of the inclusions is decreased, and additionally, hard high $CaO$ based inclusions are formed and may become a start point of failure. Therefore, the upper limit of the CaO content is 60% or less. It is preferably 55% or less, and more preferably 50% or less.

(2-2) $Al_2O_3$: 3 to 40%

$Al_2O_3$ is a useful component for further lowering a melting point of oxide-based inclusions and making those soft. To exert the above function effectively, the $Al_2O_3$ content in $CaO$-$Al_2O_3$-$SiO_2$ based inclusions is 3% or more. The content is preferably 5% or more, and more preferably 15% or more. However, when the $Al_2O_3$ content in $CaO$-$Al_2O_3$-$SiO_2$ based inclusions is too large, the oxide-based inclusions become alumina-based inclusions that are hard and are difficult to be refined, and those become a start point of failure and breakage. Therefore, the upper limit is 40% or less. It is preferably 35% or less, and more preferably 30% or less.

(2-3) $SiO_2$: 30% or more and less than 85%

$SiO_2$ is an essential component in order to form soft oxide-based inclusions having low melting point, together with CaO and $Al_2O_3$ described above. When the $SiO_2$ content in $CaO$-$Al_2O_3$-$SiO_2$ based inclusions is less than 30%, the inclusions become hard inclusions mainly including CaO and $Al_2O_3$, and those become a start point of failure. Therefore, the lower limit is 30% or more. It is preferably 35% or more, and more preferably 40% or more. However, when the $SiO_2$ content in $CaO$-$Al_2O_3$-$SiO_2$ based inclusions is too large, oxide-based inclusions become hard inclusions having high melting point and mainly including $SiO_2$, and the possibility of becoming wire breaking and a start point of failure is increased. This tendency appears extremely remarkably when the $SiO_2$ content is 85% or more. For this reason, the $SiO_2$ content in $CaO$-$Al_2O_3$-$SiO_2$ based inclusions is less than 85%. The content is preferably 70% or less, and more preferably 65% or less.

[With respect to $MnO$-$Al_2O_3$-$SiO_2$ based inclusions]

Next, $MnO$-$Al_2O_3$-$SiO_2$ based inclusions that characterize the present invention are described. As described before, $MnO$-$Al_2O_3$-$SiO_2$ based inclusions are inclusions formed when deoxidizing molten steel with Mn, Si or the like (inclusions formed at an initial stage of a deoxidizing step). Conventionally, the control of those to $CaO$-$Al_2O_3$-$SiO_2$ based inclusions has been focused on, and the investigations on a composition of $MnO$-$Al_2O_3$-$SiO_2$ based inclusions were not almost made before. Eventually, it was considered to only control to $CaO$-$Al_2O_3$-$SiO_2$ based inclusions. Contrary to this, in the present invention, an average composition of $MnO$-$Al_2O_3$-$SiO_2$ based inclusions is appropriately controlled in a stage before controlling to $CaO$-$Al_2O_3$-$SiO_2$ based inclusions by appropriate molten steel treatment. As a result, existence probability of inclusions that is difficult to be extended during hot rolling is further reduced, and fatigue properties have been remarkably improved (see examples described hereinafter).
In detail, $MnO$-$Al_2O_3$-$SiO_2$ based inclusions in the present description is defined by (3A) below, but in the present invention, an average composition of the $MnO$-$Al_2O_3$-$SiO_2$ based inclusions satisfies the requirement of (3B) below. Here, "MnO>CaO" in (3A) is defined in order to distinguish from $CaO$-$Al_2O_3$-$SiO_2$ based inclusions described before.

(3A) When $CaO$+$Al_2O_3$+$SiO_2$+$MgO$+$MnO$ is standardized as 100%, $MnO$+$Al_2O_3$+$SiO_2 \geq 80\%$, and MnO>CaO
(3B) When $CaO$+$Al_2O_3$+$SiO_2$+$MgO$+$MnO$ is standardized as 100%, an average composition of $MnO$-$Al_2O_3$-$SiO_2$ based inclusions is MnO: 10 to 70%, $Al_2O_3$: 3 to 50%, and $SiO_2$: 20 to 75%.

The composition of the $MnO$-$Al_2O_3$-$SiO_2$ inclusions defined in (3B) above defines a composition by which extensibility during hot working is obtained, and by controlling to the composition, the inclusions are extended to a size that does not become fatigue failure during hot working. In the case of falling out of the above range, the inclusions are not sufficiently extended during hot working, and remain as coarse inclusions, and those become a start point of failure, leading to the possibility of lowering fatigue properties. CaO, MgO and the like may be further contained in the $MnO$-$Al_2O_3$-$SiO_2$ inclusions.
Specifically, $SiO_2$ is an essential component for making inclusions amorphous. Furthermore, a composition that is easy to be extended during hot working is formed by appropriately containing MnO and $Al_2O_3$. To exert such effect, $SiO_2$ content is 20% or more and 75% or less, MnO content is 10% or more and 70% or less, and $Al_2O_3$ content is 3% or more and 50% or less. When those components fall out of those composition ranges, any of component concentrations is increased, and the inclusions become difficult to be extended during hot working, and the possibility of becoming a start point of failure is increased. Regarding the $SiO_2$ content, the lower limit is preferably 30% or more, and more preferably 35% or more, and the upper limit is preferably 70% or less, and more preferably 65% or less. Regarding the $Al_2O_3$ content, the lower limit is preferably 5% or more, and more preferably 10% or more, and the upper limit is preferably 30% or less. Regarding the MnO content, the lower limit is preferably 20% or more, and the upper limit is preferably 60% or less.

In the present invention, contents of oxides (MgO and CaO) other than the above oxides constituting the MnO-$Al_2O_3$-$SiO_2$ based inclusions are not limited in any way so long as the above requirements are satisfied.

That is, the contents of MgO and CaO constituting MnO-$Al_2O_3$-$SiO_2$ based inclusions are not particularly limited so long as the above requirements are satisfied, but it is preferred that the MgO content is roughly 10% or less.

Oxide-based inclusions present in the steel wire rod of the present invention have been described above.

Next, components in the steel of the present invention are described.

The present invention has been made on the assumption of a Si-killed steel wire rod useful as a material of a spring and the like, and elements ordinary contained in the Si-killed steel wire rod can be contained. Each element is described below.

C: 1.2% or less (not inclusive of 0%)

C is an element necessary for securing predetermined strength, and to effectively exert such properties, it is preferred that the C content is 0.2% or more. The C content is more preferably 0.4% or more. However, when the C content is excessive, steel becomes brittle and therefore does not become practical. Therefore, the upper limit is 1.2% or less. The preferred upper limit of the C content is 0.8% or less.

Si: 0.2 to 3%

Si is an important element to contribute to high strengthening of a steel wire rod and improvement of fatigue properties. Furthermore, Si is also a useful element for enhancing softening resistance and improving setting resistance. Furthermore, Si is an essential element for controlling a composition of MnO-$SiO_2$ based inclusions to MnO-$Al_2O_3$-$SiO_2$ based inclusions suitable for improving fatigue properties. In order to effectively exert such effects, Si content is 0.2% or more. The Si content is preferably 1.2% or more, and more preferably 1.8% or more. However, when the Si content is excessive, pure $SiO_2$ may possibly be formed during solidification, and surface decarburization and surface flaws increase, and thus, fatigue properties may be deteriorated. For this reason, the upper limit of the Si content is 3% or less. It is preferably 2.5% or less, and more preferably 2.3% or less.

Mn: 0.1 to 2%

Mn is an element acting as a deoxidizing agent and additionally increasing hardenability, thereby contributing to the enhancement of strength. In order to effectively exert such actions, the lower limit of the Mn content is 0.1% or more. The lower limit is preferably 0.4% or more, and more preferably 0.45% or more. However, when the Mn content is excessive, toughness and ductility are deteriorated. For this reason, the upper limit is 2% or less. It is preferably 1.3% or less, and more preferably 1% or less.

Furthermore, it is preferred that the contents of Si and Mn satisfy the relationship of $Mn^2/Si \geq 0.1$, and this makes easy to control MnO-$Al_2O_3$-$SiO_2$ based inclusions to a desired composition.

In the present invention, the above-described components are contained as basic components, and the balance is iron and unavoidable impurities. Examples of the unavoidable impurities include P and S. Of those, P is an element lowering toughness and ductility, and when the P content is increased, wire breaking may occur in a wire drawing step and the subsequent twisting step. For this reason, the upper limit is preferably 0.03% or less (more particularly 0.02% or less). Furthermore, similar to P, S is an element deteriorating toughness and ductility, and bonds to Mn to form MnS, thereby becoming a start point of wire breaking during wire drawing. For this reason, the upper limit is preferably 0.03% or less (more preferably 0.02% or less).

The contents of elements (Al, Ca and Mg) which are not described above and constitute the inclusions (CaO-$Al_2O_3$-$SiO_2$ based inclusions and MnO-$Al_2O_3$-$SiO_2$ based inclusions) are determined depending on amounts of the inclusions (strictly, amount of oxygen). Those elements are controlled by ordinary slag refining and alloy introduction, and a specific amount of each element (content of whole steel wire containing oxide-based inclusions) greatly differs depending on the amount of oxygen, that is, a content of inclusions, as described above. Roughly, it is preferred that Al is controlled to a range of 0.0001 to 0.003%, Ca is controlled to a range of 0.0001 to 0.002%, and Mg is controlled to a range of 0.001 % or less (inclusive of 0%).

In the present invention, the following elements can further be contained as selective components.

Cr: 3% or less (not inclusive of 0%)

Cr is an element improving matrix strength of steel by solid solution strengthening. Furthermore, similar to the case of Mn, Cr effectively acts to improve hardenability. However, when Cr is excessive, steel is easy to become brittle and sensitivity of inclusions is increased, and as a result, fatigue properties are deteriorated. For this reason, it is preferred that the upper limit of Cr amount is 3%. Cr is contained in an amount of preferably 0.1% or more, more preferably 0.5% or more, and still more preferably 0.9% or more. The upper limit of Cr amount is more preferably 2% or less, still more preferably 1.8% or less, and further more preferably 1.5% or less.

Ni: 0.5% or less (not inclusive of 0%)

Ni is an effective element to suppress decarburization of ferrite formed in hot rolling when producing a wire rod or heat treatment when producing a spring, and may be contained in a wire rod as necessary. Furthermore, Ni has an action to increase toughness of a spring after hardening and tempering. The lower limit of Ni amount is preferably 0.05% or more, more preferably 0.1% or more, and still more preferably 0.25% or more. On the other hand, when the Ni amount is excessive, residual austenite amount is increased during hardening and tempering treatment, and tensile strength lowers. For this reason, the upper limit of the Ni amount is preferably 0.5% or less (more preferably 0.4% or less, and still more preferably 0.3% or less).

V: 0.5% or less (not inclusive of 0%)

V is an element to not only bond to carbon, nitrogen or the like to form fine carbide, nitride or the like, thereby increasing hydrogen brittleness resistance and fatigue properties, but also further exert refinement effect of grains to contribute to the improvement of toughness, proof stress and setting resistance, and may be contained in a wire rod as necessary. The lower limit of V amount is preferably 0.07% or more, and more preferably 0.10% or more. However, where the V amount is excessive, the amount of carbide that is not soluted in austenite during heating for hardening is increased, and sufficient strength and hardness are difficult to be obtained. Additionally, coarsening of a nitride is occurred, and fatigue breakage is easy to occur. Furthermore, when the V amount is excessive, residual austenite amount is increased, and hardness of a spring obtained lowers. For this reason, the upper limit of the V amount is preferably 0.5% or less (more preferably 0.4% or less).

Ti: 0.1% or less (not inclusive of 0%)

Ti is an element to refine old austenite grains after hardening and tempering and improve atmospheric durability and hydrogen brittleness resistance. However, when the Ti amount is excessive, coarse nitrides are easy to precipitate, adversely affecting fatigue properties. For this reason, the upper limit of Ti amount is preferably 0.1% or less. The Ti amount is more preferably 0.01% or less, and still more preferably 0.005% or less.

Other than the above selective components (Cr, Ni, V and Ti), at least one element selected from the group consisting of Zr, Cu, Nb, Mo, Co, W, B, alkali metal, REM (rare earth element), Ba and Sr can be further added. Those elements may be added alone or as mixtures of two or more kinds. Recommended contents of those elements are as follows. Zr: 0.1% or less (not inclusive of 0%), Cu: 0.7% or less (not inclusive of 0%), Nb:0.5% or less (not inclusive of 0%), Mo: 0.5% or less (not inclusive of 0%), Co: 0.5% or less (not inclusive of 0%), W: 0.5% or less (not inclusive of 0%), B: 0.005% or less, alkali metal: 0.002% or less (not inclusive of 0%), REM: 0.01% or less (not inclusive of 0%), Ba: 0.01% or less (not inclusive of 0%), and Sr: 0.01% or less (not inclusive of 0%).

Of those elements, Zr is an element capable of obtaining a fine structure by formation of a carbonitride thereof, and is an element effective to improve toughness. However, excessive addition of Zr coarsens a carbonitride thereof, and deteriorates toughness. For this reason, the upper limit of Zr amount is preferably 0.1% or less (more preferably 0.0005% or less).

Similar to Ni, Cu is an element effective to suppress decarburization of ferrite formed during hot rolling when producing a wire rod or treat treatment when producing a spring, and may be contained in a wire rod as necessary. In addition to this action, Cu has an action to increase corrosion resistance. However, when Cu amount is excessive, hot rolling crack may occur. For this reason, the upper limit of the Cu amount is preferably 0.7% or less (more preferably 0.6% or less, and still more preferably 0.5% or less).

Similar to V, Nb is an element to bond to carbon, nitrogen or the like to form fine carbide, nitride or the like, thereby increasing hydrogen brittleness resistance and fatigue properties, and additionally to exert grain refinement effect, to contribute to the improvement of toughness, proof stress and setting resistance, and may be contained in a wire rod as necessary. Nb amount is preferably 0.01% or more (more preferably 0.02% or more). However, when the Nb amount is excessive, the amount of carbide that is not soluted in austenite during heating for hardening is increased. As a result, not only sufficient strength and hardness are difficult to be obtained, but also coarsening of nitride is occurred, and fatigue breakage is easy to occur. For this reason, the upper limit of Nb amount is preferably 0.5% or less (more preferably 0.4% or less, and still more preferably 0.3% or less).

Mo is an element effective to improve hardenability and additionally improve softening resistance to contribute to the improvement of setting resistance, and may be contained in a wire rod as necessary. The Mo amount is preferably 0.01% or more (more preferably 0.05% or more). However, when Mo amount is excessive, supercooled structure is easy to be formed during hot rolling, and ductility is also deteriorated. Therefore, in the case of containing Mo, the upper limit thereof is preferably 0.5% or less (more preferably 0.4% or less).

Co is an element to secure ductility and toughness and contribute to the improvement of fatigue properties. Co amount is preferably 0.001% or more (more preferably 0.003% or more). However, even though Co is excessively added, the above effect is saturated. Therefore, the upper limit of Co amount is preferably 0.5% or less (more preferably 0.1% or less).

W is an element effectively acting to improve corrosion resistance of a steel wire. The W amount is preferably 0.01% or more (more preferably 0.03% or more). However, even though W is excessively added, the above effect is saturated. Therefore, the upper limit of W amount is preferably 0.5% or less.

B is an element effective to prevent grain boundary segmentation of P to clean a grain boundary, thereby improving hydrogen brittleness resistance, and ductility and toughness, and may be contained in a wire rod as necessary. The B amount is preferably 0.0003% or more (more preferably 0.0005% or more). However, when the B amount is excessive, B compound such as $Fe_{23}(CB)_6$ is formed, and free B is decreased. As a result, the effect of preventing grain boundary segmentation of P is saturated. Furthermore, the B compound is coarse in many cases, and becomes a start point of fatigue breakage, thereby lowing fatigue properties. Therefore, in the case of containing B, the upper limit thereof is preferably 0.005% or less (more preferably 0.004% or less).

Alkali metal component, REM (rare earth element), Ba and Sr are elements effective to control a composition of inclusions defined in the present invention. However, addition of those elements in large amounts rather adversely affects control of a composition of the inclusions. Therefore, it is preferred to appropriately control those contents.

The alkali metal component used herein means Li, Na and K, and may be contained alone and may be contained as mixtures of two or more kinds. The content of the alkali metal component is preferably 0.00001 to 0.002% (more preferably 0.00003 to 0.0008%). The above content is a sole amount when the alkali metal component is contained alone and is a total amount when two or more kinds of alkali metal components are used.

REM (rare earth element) is an element group of lanthanoid elements (in a periodic table, 15 elements of from La of an atomic number 57 to Lu of atomic number 71) and Sc (scandium) and Y (yttrium), and those can be used alone or as mixtures of two or more kinds. Preferred rare earth elements are Ce, La and Y. Addition form of REM is not particularly limited. REM may be added in a form of misch metal mainly containing Ce and La (for example, Ce: about 70%, and La: about 20 to 30%), or may be added in a form of a simple substance such as Ce or La. Preferred content of REM is 0.001 to 0.01%. The above content is a sole amount when the REM is contained alone and is a total amount when two or more kinds are used.

Preferred ranges of Ba and Sr each are 0.0003 to 0.01%.

Components in steel of the present invention have been described above.

Next, one example of a method for producing a Si-killed steel wire rod of the present invention is described. As described above, in order to control a composition of $MnO-Al_2O_3-SiO_2$ based inclusions, a method of securing the time until $MnO-SiO_2$ based inclusions and the like are changed into desired $MnO-Al_2O_2-SiO_2$ based inclusions is effective. As means for this, for example, a method of sufficiently securing the time until the control into $CaO-Al_2O_3-SiO_2$ based inclusions is initiated after adding alloy components such as Mn and Si as shown in the examples described after (waiting time until changing into $MnO-Al_2O_3-SiO_2$ based inclusions) is exemplified.

Conventionally, for example, in the case where control of $CaO-Al_2O_3-SiO_2$ based inclusions is conducted by refining with a slag containing CaO, after adding alloy components such as Si and Mn in molten steel, refining using a slag has been initiated promptly (for example, roughly about 10 minutes under the conditions as in the examples described after). However, in this method, in the case where inclusions that are not controlled into $CaO-Al_2O_3-SiO_2$ based inclusions by slag refining remain, there is a possibility that $MnO-Al_2O_3-SiO_2$ based inclusions remain in a form of a composition that leads to the difficulty of extension during hot working.

Therefore, in the present invention, refining using CaO-containing slag is not promptly initiated after adding alloy components such as Mn and Si in molten steel as in the conventional method, but the time until the refining is initiated after adding alloy components has been sufficiently secured. This can accelerate the change of harmful initial deoxidized products formed when adding alloy components such as Si and Mn into a composition that is relatively easy to be extended during hot working.

The above holding time differs depending on a size of a ladle used, stirring conditions and the like, but the effect is recognized in about 90 minutes under the conditions of the examples described after.

Thereafter, when refining using CaO-containing slag is conducted, $CaO-Al_2O_3-SiO_2$ based inclusions having a composition useful to improve fatigue properties are obtained. The composition of $CaO-Al_2O_3-SiO_2$ based inclusions changes depending on slag basicity [$CaO/SiO_2$ (mass ratio) or the like] at that time, but preferred basicity of $CaO-Al_2O_3-SiO_2$ based inclusions satisfying the above requirements is roughly 0.5 to 1.5.

Examples

The present invention is further specifically described below by referring to the examples.

Examples

Various alloy components shown in Table 1 were added to 500 kg of molten steel smelted imitating the molten steel discharged from a converter, CaO-containing slag was then added, and a smelting treatment (slag refining) was carried out. In this case, the compositions of deoxidized products (MnO-$SiO_2$ based inclusions and MnO-$Al_2O_3$-$SiO_2$ based inclusions) were changed by changing the time until the initiation of slag refining after adding all of alloy components (see Table 2). Furthermore, the composition of CaO-$Al_2O_3$-$SiO_2$ based inclusions was changed by controlling slag basicity as shown in Table 2 (see Table 2).

Then, the molten steel obtained was cast to obtain a steel ingot. The steel ingot was forged at 1,200°C to form into a shape of 150 mm × 150 mm, followed by hot rolling at a temperature of about 900°C. Thus, a hot-rolled wire rod having a diameter of 8.0 mm was obtained.

For each wire rod thus obtained, components were analyzed under the following conditions, and additionally, composition of oxide-based inclusions and fatigue properties (breakage ratio) were measured by the following methods, and evaluated.

(1) Analysis of component in wire rod

The following components were analyzed by the following methods.

C: Burning infrared absorption method

Si, Mn, Ni, Cr, V and Ti: ICP emission spectrometry method (ICPV-1017 manufactured by Shimadzu Corporation)

Al, Mg, Zr, REM, Mo, Co, Nb, Cu, W, Ba and Li: ICP mass spectrometry method (ICP mass analyzer, Model SPQ8000, manufactured by Seiko Instruments Inc.)

Ca: Frameless atomic absorption spectrometry method

O: Inert gas fusion method

(2) Composition of oxide-based inclusions

Composition of inclusions having a short diameter of 1.5 $\mu$m or more present on a vertical cross-section (=L cross-section; cross-section including the axial, observation area is about 50,000 mm$^2$) was measured by the following method.

The above L cross-section of each wire rod was polished, and composition analysis was performed for all of oxide-based inclusions present on the polished cross-section (about 300 per one cross-section) by EPMA (Electron Probe Microanalyzer). A composition of the individual inclusions was confirmed after converted into oxide, and an average value of CaO-$Al_2O_3$-$SiO_2$ based inclusions satisfying the above (1A) and (1B) and MnO-$Al_2O_3$-$SiO_2$ based inclusions satisfying the above (3A) was obtained. As described before, inclusions in which S concentration and N concentration are 2% or less, respectively, were regarded as oxide-based inclusions. EPMA measurement conditions in this case are as follows.

EPMA apparatus: JXA-8621MX (manufactured by JEOL Ltd.)
Analyzer (EDS): TN-5500 (manufactured by Tracor Northern)
Acceleration voltage: 20 kV
Scanning current: 5 nA
Measuring method: Quantitative analysis by energy dispersion analysis (measuring the entire area of a particle)

(3) Fatigue strength test (breakage ratio)

For each wire rod (diameter: 8.0 mm), stripping (diameter: 7.4 mm)→patenting→cold wire drawing (diameter: 4 mm)→oil tempering [oil quenching and lead bathing (approximately 450°C) tempering continuous process] were performed and a wire of 4.0 mm diameter × 650 mm was manufactured.

The wire thus obtained was subjected to treatment equivalent to strain relieving annealing (400°C)→shot peening→low temperature annealing (400°C × 20 min), thereafter the fatigue strength test was performed using a Nakamura Method rotational bending tester with nominal stress: 880 MPa, rotational speed: 4,000 to 5,000 rpm, and numbers of times of stoppage: $2 \times 10^7$ times. Of broken wires, for those broken by inclusions (rupture number of inclusions), the breakage ratio (rupture ratio) was obtained by the equation below.

$$\text{Breakage ratio (\%)} =$$
$$[\text{number of samples broken by inclusions/(number of samples broken by}$$
$$\text{inclusions} + \text{number of samples in which the test was stopped after attaining prescribed}$$
$$\text{number of times)}] \times 100$$

The samples broken by inclusions are that the inclusions remain on a cross-section thereof. Therefore, samples broken by not inclusions (samples broken from the surface) can be easily determined from, for example, microscope observation or broken surface shape.

Chemical componential compositions (steel kind) of each wire rod used in the present examples are shown in Table 1, and the composition of inclusions and the results of fatigue test (breakage ratio) of each wire rod are shown in Table 2. In Table 1, the amounts of Al, Ca and Mg were Al: 0.0001 to 0.002%, Ca: 0.002% or less, and Mg: 0.0005% or less. In Table 2, the $CaO-Al_2O_3-SiO_2$ based inclusions satisfy the requirements of (1A) and (1B) defined in the present invention, and the $MnO-Al_2O_3-SiO_2$ based inclusions satisfy the requirement of (3A) defined in the present invention.

[Table 1]

| Steel kind No. | Components in steel (mass%, balance: iron and unavoidable impurities) | | | | | | |
|---|---|---|---|---|---|---|---|
| | C | Si | Mn | Cr | Ni | V | Others |
| A | 0.60 | 2.00 | 0.90 | 0.90 | 0.25 | 0.10 | |
| B | 0.60 | 2.10 | 0.50 | 1.75 | 0.20 | 0.30 | |
| C | 0.55 | 1.45 | 0.70 | 0.70 | - | - | |
| D | 0.63 | 1.45 | 0.65 | 0.65 | - | 0.09 | |
| E | 0.60 | 2.00 | 0.90 | 0.90 | - | 0.10 | |
| F | 0.63 | 1.45 | 0.65 | 0.65 | - | - | 1 ppm Li |
| G | 0.60 | 2.10 | 0.50 | 1.75 | 0.20 | 0.30 | 2 ppm Ba |
| H | 0.55 | 1.45 | 0.70 | 0.70 | - | - | 0.005% Ti |
| I | 0.65 | 2.00 | 0.90 | - | 0.25 | 0.10 | 0.01 % Mo, 0.005% Co |
| J | 0.63 | 1.45 | 0.65 | 0.65 | - | 0.09 | 0.01% Nb, 0.01% Cu |
| K | 0.60 | 2.00 | 0.90 | 0.90 | 0.25 | - | 0.1% W |
| L | 0.80 | 0.20 | 0.50 | - | - | - | |
| M | 0.60 | 2.50 | 0.50 | 0.50 | - | 0.50 | 5 ppm Zr |
| A | 0.60 | 2.00 | 0.90 | 0.90 | 0.25 | 0.10 | |
| B | 0.60 | 2.10 | 0.50 | 1.75 | 0.20 | 0.30 | |
| C | 0.55 | 1.45 | 0.70 | 0.70 | - | - | |
| D | 0.63 | 1.45 | 0.65 | 0.65 | - | 0.09 | |
| E | 0.60 | 2.00 | 0.90 | 0.90 | - | 0.10 | |
| N | 0.63 | 1.45 | 0.65 | 0.65 | - | 0.09 | |
| G | 0.60 | 2.10 | 0.50 | 1.75 | 0.20 | 0.30 | 2 ppm Ba |
| P | 0.80 | 0.20 | 0.50 | 1.75 | - | 0.30 | |

(continued)

| Steel kind No. | Components in steel (mass%, balance: iron and unavoidable impurities) | | | | | | |
|---|---|---|---|---|---|---|---|
| | C | Si | Mn | Cr | Ni | V | Others |
| M | 0.60 | 2.50 | 0.50 | 0.50 | - | 0.50 | |

[Table 2]

| No. | Steel kind No. | Fatigue test breakage ratio (%) | Time until slag refining after adding alloy components | Slag basicity CaO/SiO$_2$ | Crucible | Composition of inclusions | | | | | |
|---|---|---|---|---|---|---|---|---|---|---|---|
| | | | | | | CAS-based inclusions* | | | MAS-based inclusions* | | |
| | | | | | | CaO | Al$_2$O$_3$ | SiO$_2$ | MnO | Al$_2$O$_3$ | SiO$_2$ |
| 1 | A | 10 | about 90 min | 0.7 | Al$_2$O$_3$ | 22 | 23 | 49 | 34 | 18 | 45 |
| 2 | B | 13 | about 90 min | 0.8 | Al$_2$O$_3$ | 32 | 14 | 47 | 40 | 15 | 40 |
| 3 | C | 10 | about 90 min | 0.6 | Al$_2$O$_3$ | 30 | 10 | 55 | 26 | 36 | 35 |
| 4 | D | 17 | about 90 min | 1.3 | ZrO$_2$ | 50 | 5 | 39 | 44 | 7 | 40 |
| 5 | E | 10 | about 90 min | 0.9 | Al$_2$O$_3$ | 33 | 18 | 44 | 40 | 30 | 25 |
| 6 | F | 17 | about 90 min | 0.6 | ZrO$_2$ | 10 | 9 | 76 | 20 | 15 | 60 |
| 7 | G | 20 | about 90 min | 0.7 | Al$_2$O$_3$ | 22 | 36 | 36 | 15 | 45 | 35 |
| 8 | H | 17 | about 90 min | 0.6 | Al$_2$O$_3$ | 29 | 14 | 53 | 31 | 30 | 35 |
| 9 | I | 13 | about 90 min | 0.6 | Al$_2$O$_3$ | 24 | 18 | 52 | 32 | 23 | 41 |
| 10 | J | 20 | about 90 min | 1.3 | ZrO$_2$ | 50 | 5 | 40 | 40 | 5 | 50 |
| 11 | K | 13 | about 90 min | 0.8 | Al$_2$O$_3$ | 29 | 23 | 42 | 30 | 16 | 50 |
| 12 | L | 7 | about 90 min | 0.6 | Al$_2$O$_3$ | 22 | 16 | 58 | 66 | 5 | 23 |
| 13 | M | 17 | about 90 min | 0.6 | Al$_2$O$_3$ | 19 | 12 | 64 | 14 | 14 | 66 |
| 14 | A | 33 | about 10 min | 0.7 | Al$_2$O$_3$ | 26 | 20 | 46 | 13 | 5 | 78 |
| 15 | B | 23 | about 10 min | 0.8 | Al$_2$O$_3$ | 32 | 18 | 45 | 25 | 1 | 70 |
| 16 | C | 23 | about 10 min | 0.6 | Al$_2$O$_3$ | 31 | 11 | 53 | 13 | 55 | 26 |
| 17 | D | 40 | about 10 min | 1.3 | ZrO$_2$ | 47 | 5 | 44 | 72 | 4 | 20 |
| 18 | E | 27 | about 10 min | 0.9 | Al$_2$O$_3$ | 33 | 20 | 43 | 72 | 7 | 10 |
| 19 | N | 27 | about 10 min | 0.6 | ZrO$_2$ | 14 | 8 | 75 | 8 | 17 | 71 |
| 20 | G | 40 | about 10 min | 0.7 | Al$_2$O$_3$ | 21 | 34 | 40 | 42 | 38 | 16 |
| 21 | P | 23 | about 10 min | 0.6 | Al$_2$O$_3$ | 22 | 16 | 58 | 70 | 10 | 15 |
| 22 | M | 40 | about 10 min | 0.6 | Al$_2$O$_3$ | 17 | 12 | 66 | 10 | 4 | 83 |

*: Content of each oxide in CAS-based inclusions and MAS-based inclusions is a value when CaO+Al$_2$O$_3$+SiO$_2$+MgO+MnO is standardized as 100%.

It has been found from those tables that fatigue properties are improved in the working examples of the present invention (Nos. 1 to 13 in Table 2) containing prescribed $CaO$-$Al_2O_3$-$SiO_2$ based inclusions and $MnO$-$Al_2O_3$-$SiO_2$ based inclusions as compared with the comparative examples (Nos. 14 to 22) in which the composition of $MnO$-$Al_2O_3$-$SiO_2$ based inclusions does not satisfy the requirements of the present invention. In the comparative examples, the time until initiation of slag refining after adding alloy components is not sufficient, and was short as compared with the working examples of the present invention. It is therefore considered that $MnO$-$Al_2O_3$-$SiO_2$ based inclusions did not become the desired composition.

Industrial Applicability

The Si-killed steel wire rod of the present invention is useful as material of processed products requiring high fatigue properties, for example, springs such as a valve spring to be used in an automobile engine or a suspension, a clutch spring, a brake spring and a suspension spring; and steel wires such as a steel cord, and in particular, is extremely useful as a steel for a spring.

**Claims**

1.  A Si-killed steel wire rod excellent in fatigue properties, comprising a Si-killed steel consisting of:

    C: 1.2% or less (not inclusive of 0%, and "%" means "mass%" unless otherwise indicated, hereinafter the same),
    Si: 0.2 to 3%,
    Mn: 0.1 to 2%, and
    optionally, one or more elements selected from the group consisting of:

      Cr: 3% or less (not inclusive of 0%),
      Ni: 0.5% or less (not inclusive of 0%),
      V: 0.5% or less (not inclusive of 0%),
      Ti: 0.1 % or less (not inclusive of 0%),
      Zr: 0.1 % or less (not inclusive of 0%),
      Cu: 0.7% or less (not inclusive of 0%),
      Nb: 0.5% or less (not inclusive of 0%),
      Mo: 0.5% or less (not inclusive of 0%),
      Co: 0.5% or less (not inclusive of 0%),
      W: 0.5% or less (not inclusive of 0%),
      B: 0.005% or less (not inclusive of 0%),
      alkali metal: 0.002% or less (not inclusive of 0%),
      REM: 0.01% or less (not inclusive of 0%),
      Ba: 0.01% or less (not inclusive of 0%), and
      Sr: 0.01% or less (not inclusive of 0%),

    with the balance consisting of iron and unavoidable impurities,
    wherein 80% or more of the number of oxide-based inclusions present in the steel wire rod is a $CaO$-$Al_2O_3$-$SiO_2$ based inclusion satisfying the following compositions (1A) and (1B):

      (1A) $CaO+Al_2O_3+SiO_2+MgO+MnO \geq 85\%$
      (1B) when $CaO+Al_2O_3+SiO_2+MgO+MnO$ is standardized as 100%, $MgO+MnO \leq 15\%$ and $CaO>MnO$,

    wherein an average composition of the $CaO$-$Al_2O_3$-$SiO_2$ based inclusion satisfies the following (2):

      (2) when $CaO+Al_2O_3+SiO_3+MgO+MnO$ is standardized as 100%, CaO: 10 to 60%, $Al_2O_3$: 3 to 40%, and $SiO_2$: 30% or more and less than 85%, and

    an average composition of a $MnO$-$Al_2O_3$-$SiO_2$ based inclusion satisfying the following (3A) satisfies the following (3B):

      (3A) when $CaO+Al_2O_3+SiO_2+MgO+MnO$ is standardized as 100%, $MnO+Al_2O_3+SiO_2 \geq 80\%$ and $MnO>CaO$,

(3B) when CaO+Al$_2$O$_3$+SiO$_2$+MgO+MnO is standardized as 100%, MnO: 10 to 70%, Al$_2$O$_3$: 3 to 50%, and SiO$_2$: 20 to 75%.

2. A spring obtained from the Si-killed steel wire rod according to claim 1.

**Patentansprüche**

1. Si-beruhigter Stahlwalzdraht mit hervorragenden Ermüdungseigenschaften, umfassend einen Si-beruhigten Stahl, bestehend aus:

C: 1,2% oder weniger (0% nicht eingeschlossen und "%" bedeutet "Massen-%", wenn nicht anders angegeben, nachstehend genauso),
Si: 0,2 bis 3%,
Mn: 0,1 bis 2% und
gegebenenfalls ein oder mehrere Elemente, ausgewählt aus der Gruppe, bestehend aus:

Cr: 3% oder weniger (0% nicht eingeschlossen),
Ni: 0,5% oder weniger (0% nicht eingeschlossen),
V: 0,5% oder weniger (0% nicht eingeschlossen),
Ti: 0,1% oder weniger (0% nicht eingeschlossen),
Zr: 0,1% oder weniger (0% nicht eingeschlossen),
Cu: 0,7% oder weniger (0% nicht eingeschlossen),
Nb: 0,5% oder weniger (0% nicht eingeschlossen),
Mo: 0,5% oder weniger (0% nicht eingeschlossen),
Co: 0,5% oder weniger (0% nicht eingeschlossen),
W: 0,5% oder weniger (0% nicht eingeschlossen),
B: 0,005% oder weniger (0% nicht eingeschlossen),
Alkalimetall: 0,002% oder weniger (0% nicht eingeschlossen),
REM: 0,01% oder weniger (0% nicht eingeschlossen),
Ba: 0,01% oder weniger (0% nicht eingeschlossen) und
Sr: 0,01% oder weniger (0% nicht eingeschlossen),
der Rest bestehend aus Eisen und unvermeidlichen Verunreinigungen,

wobei 80% oder mehr der Anzahl von Einschlüssen auf Oxidbasis, vorhanden in dem Stahlwalzdraht, ein Einschluss auf Basis von CaO-Al$_2$O$_3$-SiO$_2$, genügend den nachstehenden Zusammensetzungen (1A) und (1B), ist:

(1A) CaO+Al$_2$O$_3$+SiO$_2$+MgO+MnO$\geq$85%
(1B) wenn CaO+Al$_2$O$_3$+SiO$_2$+MgO+MnO zu 100% normiert ist, MgO+MnO$\leq$15% und CaO>MnO,

wobei eine gemittelte Zusammensetzung des Einschlusses auf Basis von CaO-Al$_2$O$_3$-SiO$_2$ dem nachstehenden (2) genügt:

(2) wenn CaO+Al$_2$O$_3$+SiO$_2$+MgO+MnO zu 100% normiert ist, CaO: 10 bis 60%, Al$_2$O$_3$: 3 bis 40% und SiO$_2$: 30% oder mehr und weniger als 85% und

eine gemittelte Zusammensetzung eines Einschlusses auf Basis von MnO-Al$_2$O$_3$-SiO$_2$, genügend dem nachstehenden (3A), dem nachstehenden (3B) genügt:

(3A) wenn CaO+Al$_2$O$_3$+SiO$_2$+MgO+MnO zu 100% normiert ist, MnO+Al$_2$O$_3$+SiO$_2$$\geq$80% und MnO>CaO,
(3B) wenn CaO+Al$_2$O$_3$+SiO$_2$+MgO+MnO zu 100% normiert ist, MnO: 10 bis 70%, Al$_2$O$_3$: 3 bis 50% und SiO$_2$: 20 bis 75%.

2. Feder, erhalten aus dem Si-beruhigten Stahlwalzdraht nach Anspruch 1.

**Revendications**

1. Fil machine en acier calmé au Si dont les propriétés de fatigue sont excellentes, comprenant un acier calmé au Si constitué de :

   C : 1,2 % ou moins (0 % non inclus, et « % » signifie « % en masse » sauf indication contraire, la même définition s'appliquant ci-dessous),
   Si : 0,2 à 3 %,
   Mn : 0,1 à 2 %, et
   facultativement, un ou plusieurs éléments sélectionnés dans le groupe constitué de :

   Cr : 3 % ou moins (0 % non inclus),
   Ni : 0,5 % ou moins (0 % non inclus),
   V : 0,5 % ou moins (0 % non inclus),
   Ti : 0,1 % ou moins (0 % non inclus),
   Zr : 0,1 % ou moins (0 % non inclus),
   Cu : 0,7 % ou moins (0 % non inclus),
   Nb : 0,5 % ou moins (0 % non inclus),
   Mo : 0,5 % ou moins (0 % non inclus),
   Co : 0,5 % ou moins (0 % non inclus),
   W : 0,5 % ou moins (0 % non inclus),
   B : 0,005 % ou moins (0 % non inclus),
   métal alcalin : 0,002 % ou moins (0 % non inclus),
   REM : 0,01 % ou moins (0 % non inclus),
   Ba : 0,01 % ou moins (0 % non inclus), et
   Sr : 0,01 % ou moins (0 % non inclus),

   le reste étant constitué de fer et d'impuretés inévitables,
   dans lequel 80 % ou plus du nombre d'inclusions à base d'oxyde présentes dans le fil machine en acier sont une inclusion à base de $CaO-Al_2O_3-SiO_2$ satisfaisant les compositions (1A) et (1B) suivantes :

   (1A) $CaO + Al_2O_3 + SiO_2 + MgO + MnO \geq 85\ \%$
   (1B) quand $CaO + Al_2O_3 + SiO_2 + MgO + MnO$ est standardisé à 100 %, $MgO + MnO \leq 15\ \%$ et $CaO > MnO$,

   dans lequel une composition moyenne de l'inclusion à base de $CaO-Al_2O_3-SiO_2$ satisfait le (2) suivant :

   (2) quand $CaO + Al_2O_3 + SiO_2 + MgO + MnO$ est standardisé à 100 %, CaO : 10 à 60 %, $Al_2O_3$ : 3 à 40 %, et $SiO_2$ : 30 % ou plus et moins de 85 %, et

   une composition moyenne d'une inclusion à base de $MnO-Al_2O_3-SiO_2$ satisfaisant le (3A) suivant satisfait le (3B) suivant :

   (3A) quand $CaO + Al_2O_3 + SiO_2 + MgO + MnO$ est standardisé à 100 %, $MnO + Al_2O_3 + SiO_2 \geq 80\ \%$ et $MnO > CaO$,
   (3B) quand $CaO + Al_2O_3 + SiO_2 + MgO + MnO$ est standardisé à 100 %, MnO : 10 à 70 %, $Al_2O_3$ : 3 à 50 %, et $SiO_2$ : 20 à 75 %.

2. Ressort obtenu à partir du fil machine en acier calmé au Si selon la revendication 1.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H076037 B
- JP H0674484 B
- JP H0674485 B
- JP 2898472 B
- JP 4134204 B
- JP 4347786 B
- JP 4423050 B

**Non-patent literature cited in the description**

- Inclusion Control and High Cleanliness Steel Production Technology. **TSUYOSHI MIMURA.** 182nd and 183rd Nishiyama Memorial Technical Lecture. 2004, 125